# FASCICULE DE BREVET EUROPEEN

(11) **EP 1 131 221 B1**
(45) Date de publication et mention de la délivrance du brevet: **11.09.2002**
(21) Numéro de dépôt: 99953515.6
(22) Date de dépôt: 18.11.1999
(51) Int. Cl.: B60K 6/12, B60K 25/10, B60K 25/02, B60K 25/04

(54) **VEHICULE AUTOMOBILE POURVU D'UN MOTEUR THERMIQUE PRINCIPAL ET D'UN MOTEUR POMPE HYDRAULIQUE SECONDAIRE**
KRAFTFAHRZEUG MIT THERMISCHEM HAUPTMOTOR UND HYDRAULISCHEM ZUSATZMOTOR BZW. -PUMPE
MOTOR VEHICLE EQUIPPED WITH A MAIN HEAT ENGINE AND AN AUXILIARY HYDRAULIC PUMP ENGINE

(30) Priorité: 18.11.1998 FR 9814729
(43) Date de publication de la demande: 12.09.2001
(73) Titulaire: Sbarro, Francesco, 1422 Les Tuileries-de-Grandson (CH)
(72) Inventeur: Sbarro, Francesco, 1422 Les Tuileries-de-Grandson (CH)
(74) Mandataire: Nithardt, Roland
(86) Numéro de dépôt international: CH9900549
(87) Numéro de publication internationale: WO00029238

(56) Documents cités:
- EP-A- 0 366 088
- EP-A- 0 729 858
- WO-A-97/26145
- CA-A- 1 025 089
- US-A- 4 412 416
- US-A- 4 798 053
- US-A- 5 495 912
- US-A- 5 505 527

## Description

### Domaine technique

La présente invention concerne un véhicule automobile pourvu d'un moteur thermique principal, d'un moteur pompe hydraulique secondaire relié à un réservoir spécial de fluide hydraulique sous pression, et de moyens pour récupérer, sous la forme d'un accroissement de la pression du fluide hydraulique contenu dans ledit réservoir spécial, l'énergie développée par des parties en mouvement dudit véhicule.

### Technique antérieure

On connaît déjà des dispositifs de ce type, notamment par la publication française FR 2 254 453 A qui décrit un dispositif de récupération des énergies de freinage et d'amortissement équipé d'un accumulateur de pression hydraulique et d'une turbine hydraulique directement montée en bout d'arbre du moteur thermique et agencée pour transférer l'énergie emmagasinée sous la forme de pression hydraulique à cet arbre moteur.

Un inconvénient de ce dispositif est qu'il ne peut travailler qu'en tout ou rien en déchargeant en permanence l'accumulateur de pression, représenté par le réservoir spécial de pression hydraulique, pour transférer à l'arbre moteur une énergie de propulsion supplémentaire par rapport à celle fournie par le moteur thermique. En cas de ralentissement du véhicule, il n'est, par exemple, pas prévu que cette énergie accumulée puisse être utilisée pour freiner le véhicule.

Un autre dispositif ayant également pour objet la récupération de l'énergie générée par des éléments en mouvement d'un véhicule automobile est décrit par la publication française FR 2 191 497 A qui concerne un dispositif dans lequel les amortisseurs sont constitués par des pompes à piston à double effet qui permettent d'accroître la pression d'un fluide hydraulique qui alimente un moteur pompe hydraulique couplé à une génératrice. Ce dispositif est plus spécifiquement destiné à être monté sur un véhicule à moteur électrique, l'énergie électrique fournie par la génératrice étant utilisée par le moteur de propulsion électrique du véhicule.

Un dispositif très similaire au précédent est décrit dans la publication internationale WO 97 26145 A. Dans cette réalisation, le réservoir spécial de fluide hydraulique sous pression, qui est couplé à une pompe hydraulique à double effet coopérant avec les amortisseurs du véhicule, est couplé soit à une génératrice électrique, soit à une pompe hydraulique pour entraîner un dispositif mécanique.

Le brevet américain US 5 505 527 A décrit un système de récupération de l'énergie cinétique d'un véhicule au moment du freinage, comportant une pompe hydraulique connectée à un accumulateur de fluide hydraulique sous pression. Lors du freinage, la pompe amène du fluide hydraulique sous pression dans l'accumulateur et agit comme un frein moteur. L'énergie emmagasinée peut également être utilisée pour entraîner les roues motrices du véhicule par l'intermédiaire de la pompe hydraulique qui devient motrice à cet effet.

Le brevet canadien CA 1 025 089 A concerne également un système de récupération d'énergie pour véhicule. Cependant, dans ce système, cette récupération ne se fait pas sous la forme de pression hydraulique mais utilise des pompes à air couplées à un accumulateur. L'air comprimé accumulé constitue une source d'alimentation en énergie utilisée pour recharger la batterie du véhicule par l'intermédiaire d'une turbine à gaz et d'un générateur électrique.

Le brevet américain US 5 495 912 A concerne un véhicule selon le préambule de la revendication 1, où les parties en mouvement comportent les roues du véhicule et l'axe d'entraînement.

Les inconvénients des systèmes connus et décrits ci-dessus sont dus essentiellement à une utilisation non optimale de l'énergie accumulée sous la forme de pression hydraulique et générée par toutes les pièces en mouvement d'un véhicule et, en particulier, de l'énergie générée par les freins et par les amortisseurs.

### Exposé de l'invention

La présente invention se propose d'utiliser de façon optimale cette énergie hydraulique récupérée et disponible pour obtenir une économie substantielle de la consommation et réduire la pollution en conséquence.

Ce but est atteint par le véhicule selon l'invention, caractérisé en ce que lesdites parties en mouvement dudit véhicule comportent en combinaison les suspensions, les freins, le bloc du moteur thermique principal et une cloche à dépression couplée au conduit d'admission dudit moteur thermique principal.

Selon un mode de réalisation particulièrement avantageux, ledit bloc du moteur thermique principal est couplé à un vérin hydraulique à double effet pour récupérer, sous la forme de fluide hydraulique sous pression, l'énergie produite par le couple d'accélération et de décélération de ce moteur.

D'une manière préférentielle, ledit moteur pompe hydraulique secondaire est couplé à l'arbre primaire de la boîte de vitesses dudit véhicule.

Selon une forme de réalisation particulièrement avantageuse, ladite unité centrale de gestion est connectée à un capteur agencé pour détecter une poussée sur la pédale de frein et/ou un relâchement de la pédale d'accélérateur, et agencée pour commander la mise au ralenti du moteur thermique principal, pour débrayer ce dernier de l'arbre d'entraînement et pour activer le moteur pompe hydraulique secondaire en vue de mettre à disposition un frein moteur distinct du frein moteur traditionnel constitué par le moteur thermique principal.

De façon avantageuse, le véhicule comporte une vanne à commande électrique montée sur le circuit hydraulique du véhicule, et l'unité centrale de gestion est agencée pour fermer progressivement cette vanne, au moment du freinage du véhicule, afin d'empêcher un retour direct du fluide hydraulique vers le réservoir d'alimentation du circuit hydraulique et pour dériver ce fluide hydraulique vers le réservoir spécial de fluide sous pression en vue d'une utilisation ultérieure de l'énergie cinétique ainsi récupérée sous la forme de fluide sous pression.

D'une manière préférentielle, l'unité centrale de gestion est agencée de telle manière que, après un arrêt de courte durée du véhicule, elle transmet au moteur pompe hydraulique secondaire un signal de commande pour faire avancer le véhicule en libérant une partie de l'énergie cinétique récupérée et emmagasinée sous la forme de fluide hydraulique sous pression dans ledit réservoir spécial.

L'unité centrale de gestion est avantageusement agencée pour transmettre au moteur pompe hydraulique secondaire un signal de commande pour lancer le moteur thermique principal en remplaçant le démarreur électrique du véhicule, suite à une accélération à fond pour faire avancer ledit véhicule de façon normale.

### Description sommaire des dessins

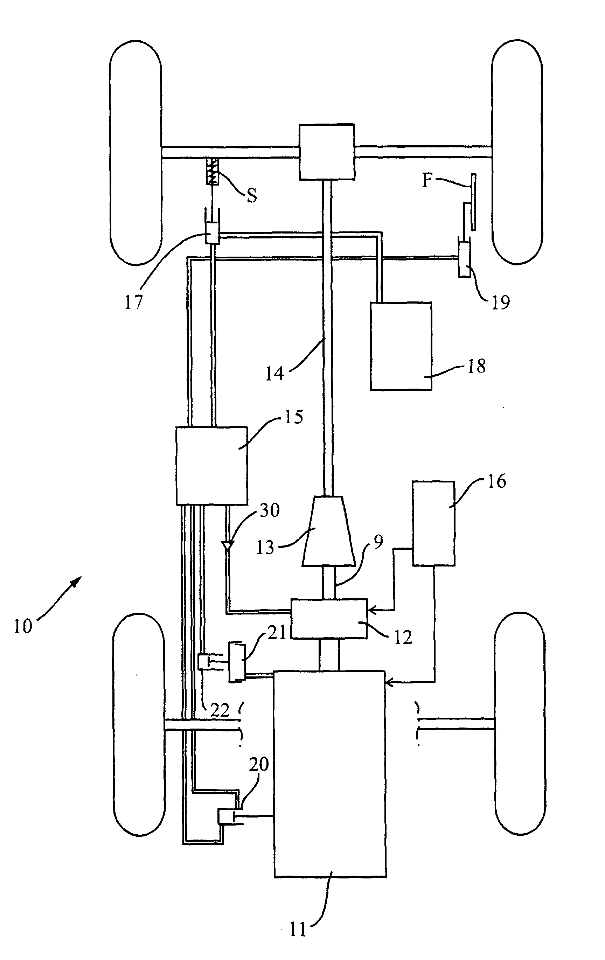

L'invention sera mieux comprise en référence à la description d'un exemple de réalisation préféré donné à titre d'exemple non limitatif et à la figure annexée qui représente une vue schématique d'une forme de réalisation préférée d'un véhicule selon l'invention.

### Meilleure manière de réaliser l'invention

En référence à la figure, le véhicule automobile 10, représenté de façon schématique, comporte notamment un moteur thermique principal 11 et un moteur pompe hydraulique secondaire 12 couplé à l'arbre primaire 9, c'est-à-dire à l'arbre d'entrée de la boîte de vitesses 13 dont l'arbre de sortie constitue, de manière connue en soi, l'arbre de transmission 14 du véhicule 10. Il comporte également un réservoir spécial 15 de fluide hydraulique sous pression connecté, d'une part, audit moteur pompe hydraulique secondaire 12 par l'intermédiaire d'une vanne à commande électrique 30 et, d'autre part, à un ensemble de composants qui seront définis plus en détail ci-après. Il comporte enfin une unité centrale de gestion 16 qui commande le moteur thermique principal 11 et ledit moteur pompe hydraulique secondaire 12, et plus généralement assure une gestion intelligente de l'énergie cinétique disponible et, en particulier, de l'énergie récupérée sous la forme de fluide hydraulique sous pression. A cet effet, cette unité centrale 16 est associée à des capteurs liés aux différentes parties en mouvement du véhicule, notamment les suspensions, les freins et le bloc du moteur thermique principal 11.

Les suspensions S du véhicule 10 sont associées à au moins un vérin hydraulique à simple effet 17 agencé pour alimenter le réservoir spécial 15 en fluide hydraulique sous pression d'une manière qui sera décrite plus en détail par la suite. A cet effet, le réservoir spécial 15 est monté dans le circuit hydraulique du véhicule et connecté au réservoir d'alimentation en fluide hydraulique 18 du véhicule.

Les freins F du véhicule 10 sont associés à au moins un vérin hydraulique 19 agencé pour alimenter le réservoir spécial 15 en fluide hydraulique sous pression, d'une manière qui sera décrite plus en détail par la suite.

Le bloc du moteur thermique principal 11 est associé à un vérin hydraulique 20 à double effet agencé pour utiliser le couple agissant sur ce bloc à chaque accélération et à chaque décélération, en délivrant vers le réservoir spécial 15 du fluide hydraulique à haute pression qui récupère l'énergie générée par ledit couple d'accélération et de décélération.

En outre, le conduit d'admission du moteur thermique principal 11 est associé à une cloche à dépression 21 qui est elle-même couplée à un vérin hydraulique à simple effet 22 pour récupérer l'énergie générée au moment d'une décélération sous la forme d'une dépression qui déplace les parois de ladite cloche à dépression, et pour la transformer, au moyen dudit vérin hydraulique 22, en pression hydraulique emmagasinée dans le réservoir spécial 15 de fluide hydraulique sous pression.

Le mode de fonctionnement, et plus particulièrement l'utilisation rationnelle de l'énergie emmagasinée, est entièrement commandé par l'unité centrale de gestion et se déroule de la manière suivante:
- Dès que le conducteur exerce une poussée sur la pédale de frein, un capteur approprié détecte cette intervention et transmet un signal à l'unité centrale de gestion pour mettre le moteur thermique principal au ralenti, pour débrayer ce moteur de l'arbre d'entraînement des roues du véhicule, et pour activer le moteur pompe hydraulique secondaire en vue de mettre à disposition un frein moteur distinct du frein moteur traditionnel constitué par le moteur thermique principal. Le capteur est conçu de telle manière qu'il n'agit qu'à partir d'un certain seuil. Il peut également faire partie d'une suite de capteurs qui déterminent la force de freinage demandée par le conducteur et qui transmettent à l'unité centrale de gestion des signaux proportionnels à cette force. Le moteur pompe hydraulique secondaire est commandé par un signal proportionnel et fournit une force de freinage dont l'intensité est elle-même proportionnelle à ce signal.
- Une situation similaire se produit lorsque le conducteur relâche la pédale de l'accélérateur, sans toutefois toucher la pédale de freinage. Un capteur détecte cette information et transmet à l'unité centrale de gestion un signal qui conduit au débrayage du moteur thermique principal. Si la décélération se prolonge au-delà d'un laps de temps prédéterminé, l'unité centrale de gestion envoie un signal de commande au moteur pompe hydraulique secondaire qui est mis en fonction pour exercer une action de frein moteur sur l'arbre primaire du véhicule auquel il est accouplé.
- Pour assurer l'effet de frein moteur au moyen du moteur pompe hydraulique secondaire, l'unité centrale de gestion transmet à la vanne à commande électrique un signal proportionnel à la valeur du couple de freinage requis. Cette vanne commande ainsi le débit du fluide hydraulique dans le circuit qui connecte le réservoir spécial de fluide hydraulique sous pression au moteur pompe hydraulique secondaire. Plus le couple est élevé, plus le débit est élevé et plus l'ouverture commandée électriquement de la vanne est grande.
- Dès que le conducteur touche la pédale de frein, on se retrouve dans le cas de figure décrit précédemment. La vanne à commande électrique se ferme progressivement pour empêcher un retour direct du fluide hydraulique vers le réservoir d'alimentation du circuit hydraulique et dérive ce fluide hydraulique vers le réservoir spécial de fluide sous pression en vue d'une utilisation ultérieure de l'énergie cinétique ainsi récupérée.
- Lors d'un arrêt complet de courte durée du véhicule, par exemple en circulation urbaine devant des feux de signalisation ou dans un ralentissement dû à la circulation, le moteur thermique principal est arrêté par l'unité centrale de gestion.
- Au moment du démarrage du véhicule après un tel arrêt, le moteur thermique principal n'est pas immédiatement lancé. Le moteur pompe hydraulique secondaire prend le relais et fait avancer le véhicule en libérant une partie de l'énergie récupérée et emmagasinée sous la forme de fluide hydraulique sous pression. Tant que le véhicule avance lentement ou par à-coups, le moteur thermique principal n'est pas lancé. Dès que le conducteur accélère à fond pour faire avancer le véhicule de façon normale, le moteur pompe hydraulique secondaire lance le moteur thermique principal en remplaçant le démarreur électrique du véhicule et économise de ce fait de l'énergie, étant donné que l'énergie de lancement du moteur thermique principal est de l'énergie récupérée, donc quasiment gratuite.
- Lorsque le moteur thermique principal est arrêté, le véhicule étant en phase de descente, le moteur pompe hydraulique secondaire peut fonctionner pendant de petits intervalles de temps successifs et ainsi accumuler de l'énergie sous la forme de fluide hydraulique mis sous pression par le moteur pompe hydraulique secondaire entraîné par l'énergie cinétique du véhicule. En montée, le moteur pompe hydraulique secondaire peut exercer une fonction de frein à main anti-recul.
- En phase de décélération, la dépression engendrée dans le collecteur d'admission est utilisée et transformée en pompage hydraulique au moyen de la cloche à dépression qui coopère avec le vérin hydraulique à simple effet travaillant à la compression pour mettre sous pression le fluide hydraulique. La recharge du réservoir spécial de fluide sous pression élevée peut se faire de façon automatique à intervalles réguliers, ou de façon irrégulière dès que la pression du fluide hydraulique a atteint un certain seuil détecté par un capteur approprié.

On peut également prévoir que les suspensions soient remplacées ou complétées par une pompe à simple effet et que, en phase de circulation normale, elles génèrent du fluide hydraulique sous pression élevée qui peut être stocké dans le réservoir spécial approprié en vue d'une utilisation ultérieure.

En outre, lors d'une accélération, le moteur subit un couple qui est absorbé par des blocs amortisseurs en caoutchouc qui empêchent l'arrachement du bloc moteur du support auquel il est fixé. De ce fait, une pompe à double effet peut être montée en parallèle aux blocs amortisseurs pour mettre en pression du fluide hydraulique à chaque accélération et à chaque décélération, ce fluide étant stocké et pouvant ensuite être réutilisé pour alimenter le moteur pompe hydraulique secondaire.

## Revendications

1. Véhicule automobile équipé d'un moteur (11) thermique principal, d'un moteur (12) pompe hydraulique secondaire relié à un réservoir (15) spécial de fluide hydraulique sous pression, et de moyens (17,19,20,21) pour récupérer, sous la forme d'un accroissement de la pression du fluide hydraulique contenu dans ledit réservoir spécial, l'énergie développée par des parties en mouvement dudit véhicule, et d'une unité centrale de gestion (16) agencée pour débrayer le moteur thermique principal (11) et enclencher le moteur pompe hydraulique secondaire (12) en fonction de paramètres de fonctionnement du véhicule détectés par des capteurs couplés aux parties en mouvement dudit véhicule, **caractérisé en ce que** lesdites parties en mouvement dudit véhicule comportent en combinaison les suspensions, les freins, le bloc du moteur thermique principal et une cloche à dépression (21) couplée au conduit d'admission dudit moteur thermique principal (11).

2. Véhicule automobile selon la revendication 1, **caractérisé en ce que** ledit bloc du moteur thermique principal (11) est couplé à un vérin hydraulique (20) à double effet pour récupérer, sous la forme de fluide hydraulique sous pression, l'énergie produite par le couple d'accélération et de décélération de ce moteur.

3. Véhicule automobile selon la revendication 1, **caractérisé en ce que** ledit moteur pompe hydraulique secondaire (12) est couplé à l'arbre primaire (9) de la boîte de vitesses (13) dudit véhicule.

4. Véhicule automobile selon la revendication 1, **caractérisé en ce que** ladite unité centrale de gestion (16) est connectée à un capteur agencé pour détecter une poussée sur la pédale de frein et/ou un relâchement de la pédale d'accélérateur, et agencée pour commander la mise au ralenti du moteur thermique principal (11), pour débrayer ce dernier de l'arbre d'entraînement du véhicule et pour activer le moteur pompe hydraulique secondaire (12) en vue de mettre à disposition un frein moteur distinct du frein moteur traditionnel constitué par le moteur thermique principal (11).

5. Véhicule automobile selon la revendication 1, **caractérisé en ce qu'**il comporte une vanne à commande électrique (30) montée sur le circuit hydraulique du véhicule, et **en ce que** l'unité centrale de gestion (16) est agencée pour fermer progressivement cette vanne, au moment du freinage du véhicule, afin d'empêcher un retour direct du fluide hydraulique vers le réservoir d'alimentation du circuit hydraulique (18) et pour dériver ce fluide hydraulique vers le réservoir spécial de fluide sous pression (15) en vue d'une utilisation ultérieure de l'énergie cinétique ainsi récupérée sous la forme de fluide sous pression.

6. Véhicule selon la revendication 1, **caractérisé en ce que** l'unité centrale de gestion (16) est agencée de telle manière que, après un arrêt de courte durée du véhicule, elle transmet au moteur pompe hydraulique secondaire (12) un signal de commande pour faire avancer le véhicule en libérant une partie de l'énergie récupérée et emmagasinée sous la forme de fluide hydraulique sous pression dans ledit réservoir spécial (15).

7. Véhicule selon la revendication 1, **caractérisé en ce que** l'unité centrale de gestion (16) est agencée pour transmettre au moteur pompe hydraulique secondaire (12) un signal de commande pour lancer le moteur thermique principal (11) en remplaçant le démarreur électrique du véhicule, suite à une accélération à fond pour faire avancer le véhicule de façon normale.

## Patentansprüche

1. Kraftfahrzeug mit einem Hauptverbrennungsmotor (11), einem sekundären Hydraulikpumpenmotor (12), der mit einem Spezialbehälter (15) für unter Druck stehende Hydraulikflüssigkeit verbunden ist, und mit Mitteln (17,19,20,21) zur Wiedergewinnung der von den in Bewegung befindlichen Teilen des Fahrzeuges entwickelten Energie in Form eines Druckanstieges der in dem Spezialbehälter enthaltenen Hydraulikflüssigkeit, und mit einer zentralen Steuerungseinheit (16), die in der Lage ist, den Hauptverbrennungsmotor (11) auszukuppeln und den sekundären Hydraulikpumpenmotor (12) in Abhängigkeit von Betriebsparametern des Fahrzeuges einzukuppeln, die von an den in Bewegung befindlichen Teilen des Fahrzeuges angebrachten Meßfühlern erkannt werden,
**dadurch gekennzeichnet, daß**
die in Bewegung befindlichen Teile des Fahrzeuges aus einer Kombination der Aufhängungen, der Bremsen, des Blockes des Hauptverbrennungsmotors und einer mit dem Einlaßkanal des Hauptverbrennungsmotors (11) verbundenen Unterdruckglocke (21) bestehen.

2. Kraftfahrzeug nach Anspruch 1,
**dadurch gekennzeichnet, daß**
der Block des Hauptverbrennungsmotors (11) zur Wiedergewinnung der durch das Beschleunigungs- und das Abbremsungsmoment erzeugten Energie des Motors in Form von unter Druck stehender Hydraulikflüssigkeit mit einem doppeltwirkenden Hydraulikzylinder (20) verbunden ist.

3. Kraftfahrzeug nach Anspruch 1,
**dadurch gekennzeichnet, daß**
der sekundäre Hydraulikpumpenmotor (12) mit der Antriebswelle (9) des Getriebes (13) des Fahrzeuges verbunden ist.

4. Kraftfahrzeug nach Anspruch 1,
**dadurch gekennzeichnet, daß**
die zentrale Steuerungseinheit (16) mit einem Meßfühler verbunden ist, der in der Lage ist, einen Druck auf das Bremspedal und/oder ein Loslassen des Gaspedals zu erkennen und der in der Lage ist, die Abdrosselung des Hauptverbrennungsmotors (11) zu regeln, um den letzteren von der Antriebswelle des Fahrzeuges auszukuppeln und den sekundären Hydraulikpumpenmotor (12) zu aktivieren, um einen sich von der aus dem Hauptverbrennungsmotor (11) bestehenden traditionellen Motorbremse unterscheidenden Motor bereitzustellen.

5. Kraftfahrzeug nach Anspruch 1,
**dadurch gekennzeichnet, daß**
es ein auf dem Hydraulikkreislauf des Fahrzeuges angebrachtes elektrisch betätigtes Ventil (30) aufweist, und die zentrale Steuerungseinheit (16) in der Lage ist, das Ventil beim Abbremsen des Fahrzeuges fortschreitend zu schließen, um eine direkte Rückkehr der Hydraulikflüssigkeit in den Versorgungsbehälter für den Hydraulikkreislauf (18) zu verhindern und um die Hydraulikflüssigkeit zwecks späterer Nutzung der so wiedergewonnenen kinetischen Energie in Form einer unter Druck stehenden Flüssigkeit zu dem Spezialbehälter (15) für unter Druck stehende Hydraulikflüssigkeit umzuleiten.

6. Kraftfahrzeug nach Anspruch 1,
**dadurch gekennzeichnet, daß**
die zentrale Steuerungseinheit (16) so angeordnet ist, daß sie nach einem kurzzeitigen Anhalten des Fahrzeuges ein Steuersignal an den sekundären Hydraulikpumpenmotor (12) überträgt, damit er das Fahrzeug durch Freisetzung eines Teils der wiedergewonnenen, und in Form einer in dem Spezialbehälter (15) unter Druck stehenden Hydraulikflüssigkeit gespeicherten Energie vorwärts bewegt.

7. Kraftfahrzeug nach Anspruch 1,
**dadurch gekennzeichnet, daß**
die zentrale Steuerungseinheit (16) in der Lage ist, nach einer Vollgasbeschleunigung ein Steuersignal an den sekundären Hydraulikpumpenmotor (12) zu übertragen, so daß dieser, anstelle des elektrischen Anlassers des Fahrzeuges, den Hauptverbrennungsmotor (11) startet, um das Fahrzeug auf normale Art und Weise vorwärts zu bewegen.

## Claims

1. A motor vehicle equipped with a main heat engine (11), an auxiliary hydraulic pump engine (12) connected to a special reservoir (15) for pressurised hydraulic fluid, and means (17, 19, 20, 21) for recovering, in the form of an increase in the pressure of the hydraulic fluid contained in the said special reservoir, the energy developed by the moving parts of the said vehicle, and of a central control unit (16) designed to disengage the main heat engine (11) and to engage the auxiliary hydraulic pump engine (12) as a function of operating parameters of the vehicle which are detected by sensors coupled to the moving parts of the said vehicle,
**characterised in that** the said moving parts of the said vehicle comprise in combination the suspensions, the brakes, the unit of the main heat engine and a depression chamber (21) coupled to the intake port of the said main heat engine (11).

2. A motor vehicle according to Claim 1,
**characterised in that** the said unit of the main heat engine (11) is coupled to a dual-action hydraulic jack (20) to recover, in the form of pressurised hydraulic fluid, the energy produced by the acceleration and deceleration couple of this motor.

3. A motor vehicle according to Claim 1,
**characterised in that** the said auxiliary hydraulic pump engine (12) is coupled to the primary shaft (9) of the gearbox (13) of the said vehicle.

4. A motor vehicle according to Claim 1,
**characterised in that** the said central control unit (16) is connected to a sensor designed to detect a thrust on the brake pedal and/or a release of the accelerator pedal, and designed to control the slowing down of the main heat engine (11), in order to disengage the latter from the drive shaft of the vehicle and to activate the auxiliary hydraulic pump engine (12) with a view to making available an engine brake distinct from the traditional engine brake constituted by the main heat engine (11).

5. A motor vehicle according to Claim 1,
**characterised in that** it comprises an electric control valve (30) mounted on the hydraulic circuit of the vehicle,
**and in that** the central control unit (16) is designed to progressively close this valve, at the moment of the braking of the vehicle, so as to prevent a direct return of the hydraulic fluid towards the supply reservoir for the hydraulic circuit (18) and so as to divert this hydraulic fluid towards the special reservoir for pressurised fluid (15) with a view to a subsequent utilisation of the kinetic energy thus recovered in the form of pressurised fluid.

6. A vehicle according to Claim 1,
**characterised in that** the central control unit (16) is designed in such a manner that, after a short halt of the vehicle, it transmits to the auxiliary hydraulic pump engine (12) a control signal to make the vehicle advance by releasing a part of the energy recovered and stored in the form of pressurised hydraulic fluid in the said special reservoir (15).

7. A vehicle according to Claim 1,
**characterised in that** the central control unit (16) is designed to transmit to the auxiliary hydraulic pump engine (12) a control signal to start the main heat engine (11) by replacing the electric starter of the vehicle, further to a full acceleration to make the vehicle advance in the normal manner.
